(19)

Europäisches
Patentamt
European
Patent Office
Office européen
des brevets

(11) **EP 4 354 864 A1**

(12) **EUROPEAN PATENT APPLICATION**
published in accordance with Art. 153(4) EPC

(43) Date of publication:
**17.04.2024 Bulletin 2024/16**

(21) Application number: **22819606.9**

(22) Date of filing: **09.06.2022**

(51) International Patent Classification (IPC):
**H04N 19/13** (2014.01)

(52) Cooperative Patent Classification (CPC):
**H04N 19/13; H04N 19/136**

(86) International application number:
**PCT/CN2022/097852**

(87) International publication number:
**WO 2022/258009 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2021 CN 202110656066**

(71) Applicant: **Vivo Mobile Communication Co., Ltd.
Dongguan, Guangdong 523863 (CN)**

(72) Inventors:
• **ZHANG, Wei
  Dongguan, Guangdong 523863 (CN)**
• **TIAN, Tengya
  Dongguan, Guangdong 523863 (CN)**
• **LV, Zhuoyi
  Dongguan, Guangdong 523863 (CN)**
• **YANG, Fuzheng
  Dongguan, Guangdong 523863 (CN)**

(74) Representative: **Conti, Marco
  Bugnion S.p.A.
  Via di Corticella, 87
  40128 Bologna (IT)**

(54) **ENTROPY ENCODING/DECODING METHODS AND APPARATUSES**

(57)    This application discloses an entropy encoding method and apparatus, and an entropy decoding method and apparatus. The entropy encoding method in the embodiments of this application includes: obtaining, by an entropy encoding apparatus, sparsity/density information of a to-be-encoded target point cloud; determining, based on the sparsity/density information, a type of an occupancy code context model used to perform entropy encoding on the target point cloud; and performing entropy encoding on the target point cloud based on the type of the occupancy code context model.

FIG. 2

**Description**

**CROSS-REFERENCE TO RELATED APPLICATIONS**

This application claims priority to Chinese Patent Application No. 202110656066.6, filed in China on June 11, 2021, which is incorporated herein by reference in its entirety.

**TECHNICAL FIELD**

This application pertains to the image processing field, and particularly relates to an entropy encoding method and apparatus, and an entropy decoding method and apparatus.

**BACKGROUND**

Two sets of context models in a point cloud reference software model (Point cloud Reference Software Model, PCRM) V3 are respectively intended for two categories of point clouds: sparse point clouds (cat1A and cat2frame) and dense point clouds (cat1B and cat3). There are the following disadvantages in selection of context models in the PCRM V3.

1. A cat1B sequence in an official test sequence of the audio video coding standard (Audio Video coding Standard, AVS) working group is characterized by a large number of points and large storage space, but spatial volume represented by geometric information of the cat1B sequence is also correspondingly large. Therefore, it is not necessarily accurate to consider an entire point cloud as a "dense" point cloud, and correspondingly, optimal performance may not necessarily be achieved by selecting context model 2.
2. In existing test conditions of the AVS working group, under a geometrically lossy condition of the AVS working group, geometric coordinates of the point cloud are quantized in a preprocessing process, and the quantization may be considered as different degrees of scaling of the point cloud to some extent. Therefore, under the geometrically lossy condition, sparse point clouds (cat1A and cat2frame) are not "sparse" at low bit rates.

However, in existing configurations, a same context model is configured for different slices (slice) of a same sequence at various bit rates, and optimal performance cannot be achieved.

**SUMMARY**

Embodiments of this application provide an entropy encoding method and apparatus, and an entropy decoding method and apparatus, to resolve a problem that a manner of selecting a context model for a point cloud in an existing entropy encoding process cannot ensure optimal encoding efficiency.

According to a first aspect, an entropy encoding method is provided and includes:

obtaining, by an entropy encoding apparatus, sparsity/density information of a to-be-encoded target point cloud;
determining, based on the sparsity/density information, a type of an occupancy code context model used to perform entropy encoding on the target point cloud; and
performing entropy encoding on the target point cloud based on the type of the occupancy code context model.

According to a second aspect, an entropy decoding method is provided and includes:

obtaining, by an entropy decoding apparatus, a type of an occupancy code context model used to perform entropy decoding on a to-be-decoded target point cloud, where the type of the occupancy code context model used to perform entropy decoding on the target point cloud is determined by sparsity/density information of the target point cloud; and
performing entropy decoding on the target point cloud based on the type of the occupancy code context model.

According to a third aspect, an entropy encoding apparatus is provided and includes:

a first obtaining module, configured to obtain sparsity/density information of a to-be-encoded target point cloud;
a first determining module, configured to determine, based on the sparsity/density information, a type of an occupancy code context model used to perform entropy encoding on the target point cloud; and
an encoding module, configured to perform entropy encoding on the target point cloud based on the type of the occupancy code context model.

According to a fourth aspect, an entropy decoding apparatus is provided and includes:

a second obtaining module, configured to obtain a type of an occupancy code context model used to perform entropy decoding on a to-be-decoded target point cloud, where the type of the occupancy code context model used to perform entropy decoding on the target point cloud is determined by sparsity/density information of the target point cloud; and
a decoding module, configured to perform entropy decoding on the target point cloud based on the type of the occupancy code context model.

According to a fifth aspect, an entropy encoding apparatus is provided and includes a processor, a memory, and a program or instructions stored in the memory and capable of running on the processor. When the program or instructions are executed by the processor, the steps of the method according to the first aspect are implemented.

According to a sixth aspect, an entropy encoding apparatus is provided and includes a processor and a communications interface. The processor is configured to: obtain sparsity/density information of a to-be-encoded target point cloud;

determine, based on the sparsity/density information, a type of an occupancy code context model used to perform entropy encoding on the target point cloud; and
perform entropy encoding on the target point cloud based on the type of the occupancy code context model.

According to a seventh aspect, an entropy decoding apparatus is provided and includes a processor, a memory, and a program or instructions stored in the memory and capable of running on the processor. When the program or instructions are executed by the processor, the steps of the method according to the second aspect are implemented.

According to an eighth aspect, an entropy decoding apparatus is provided and includes a processor and a communications interface. The processor is configured to: obtain a type of an occupancy code context model used to perform entropy decoding on a to-be-decoded target point cloud, where the type of the occupancy code context model used to perform entropy decoding on the target point cloud is determined by sparsity/density information of the target point cloud; and
perform entropy decoding on the target point cloud based on the type of the occupancy code context model.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, a chip is provided. The chip includes a processor and a communications interface. The communications interface is coupled to the processor. The processor is configured to run a program or instructions to implement the steps of the method according to the first aspect or the second aspect.

According to an eleventh aspect, a computer program or a program product is provided. The computer program or program product is stored in a non-volatile storage medium. The program or program product is executed by at least one processor to implement the steps of the method according to the first aspect or the second aspect.

According to a twelfth aspect, a communications device is provided, and configured to perform the steps of the method according to the first aspect or perform the steps of the method according to the second aspect.

In the embodiments of this application, the type of the occupancy code context model used to perform entropy encoding on the target point cloud is determined by using the sparsity/density information of the target point cloud. Therefore, the occupancy code context model can be properly selected, and optimal encoding efficiency is ensured.

## BRIEF DESCRIPTION OF DRAWINGS

FIG. 1 is a framework diagram of an AVS codec;
FIG. 2 is a schematic flowchart of an entropy encoding method according to an embodiment of this application;
FIG. 3 is a schematic diagram of spatial positions of eight subnodes relative to a current node, and a coordinate system;
FIG. 4 is a schematic diagram of same-level reference neighboring nodes of each subnode;
FIG. 5 is a schematic diagram of four groups of reference neighboring nodes of a current node;
FIG. 6 is a schematic diagram of reference neighboring nodes at a parent node level (current node level) of each subnode;
FIG. 7 is a schematic diagram of same-level coplanar neighbors of each subnode;
FIG. 8 is a schematic diagram of modules of an entropy encoding apparatus according to an embodiment of this application;
FIG. 9 is a block diagram of a structure of an entropy encoding apparatus according to an embodiment of this application;
FIG. 10 is a schematic flowchart of an entropy decoding method according to an embodiment of this application;
FIG. 11 is a schematic diagram of modules of an entropy decoding apparatus according to an embodiment of this application; and
FIG. 12 is a block diagram of a structure of an encoding/decoding apparatus according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

An encoder corresponding to an entropy encoding method and a decoder corresponding to an entropy decoding method in the embodiments of this application may both be terminals. The terminal may also be referred to as a terminal device or user equipment (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicular user equipment (VUE), or pedestrian user equipment (PUE). The wearable device includes a smart watch, a smart band, an earphone, glasses, or the like. It should be noted that a specific type of the terminal is not limited in the embodiments of this application.

For ease of understanding, the following describes some content in the embodiments of this application.

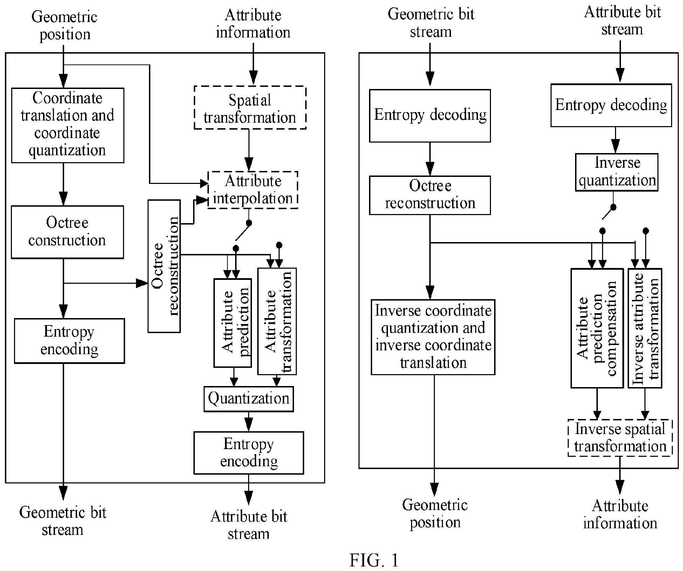

FIG. 1 is a framework diagram of an audio video coding standard codec. In a point cloud AVS encoder framework, geometric information of a point cloud and attribute information corresponding to each point are encoded separately. First, coordinate transformation is performed on the geometric information, so that all point clouds are included in a bounding box (bounding box). Then quantization is performed. This quantization step mainly plays a role of scaling. Due to quantization and rounding, geometric information of some points is the same. Whether to remove duplicate points is determined based on a parameter. The process of quantization and removal of the duplicate points belongs to a preprocessing process. Then the bounding box is partitioned in an order of breadth-first traversal (octree/quadtree/binary tree), and an occupancy code of each node is encoded. In an octree-based geometric encoding framework, the bounding box is partitioned sequentially to obtain sub-cubes, and division continues to be performed on non-empty (including points in the point cloud) sub-cubes and is not stopped until leaf nodes obtained through division are $1 \times 1 \times 1$ unit cubes. Then the number of points included in each leaf node is encoded, and encoding of the geometric octree is finally accomplished to generate a binary bit stream. In an octree-based geometric decoding process, a decoder obtains the occupancy code of each node through continuous parsing in the order of breadth-first traversal, sequentially and continuously partitions the nodes, and does not stop division until $1 \times 1 \times 1$ unit cubes are obtained through division. The number of points included in each leaf node is obtained through parsing, and geometrically reconstructed point cloud information is finally obtained through recovery.

After the geometric encoding is completed, the geometric information is reconstructed. Currently, attribute encoding is mainly performed for color and reflectivity information. First, whether color space conversion is performed is determined. If color space conversion is performed, color information is converted from a red green blue (Red Green Blue, RGB) color space to a YUV (Y is a luminance component, and UV is a chrominance component) color space. Then the reconstructed point cloud is recolored by using an original point cloud, so that uncoded attribute information corresponds to the reconstructed geometric information. There are two modules in color information encoding: attribute prediction and attribute transformation. An attribute prediction process is as follows: First, point clouds are reordered and then differential prediction is performed. There are two reordering methods: Morton reordering and Hilbert (Hilbert) reordering. For cat1A and cat2 sequences, Hilbert reordering is performed. For cat1B and cat3 sequences, Morton reordering is performed. Attribute prediction is performed on the ordered point clouds in a differential manner, and finally quantization and entropy encoding are performed on prediction residuals to generate a binary bit stream. An attribute transformation process is as follows: First, wavelet transformation is performed on an attribute of a point cloud, and a transform coefficient is quantized; then a reconstructed value of the attribute is obtained through inverse quantization and inverse wavelet transformation; then a difference between an original attribute and the reconstructed value of the attribute is calculated, so that an attribute residual is obtained and quantized; and finally, entropy encoding is performed on the quantized transform coefficient and the attribute residual to generate a binary bit stream. This application relates to geometric encoding and geometric decoding parts, and more precisely, this application is an improvement over entropy encoding and entropy decoding of the geometric encoding and geometric decoding parts.

The following describes in detail an entropy encoding method and apparatus, and an entropy decoding method and apparatus according to the embodiments of this application by using some embodiments and application scenarios thereof with reference to the accompanying drawings.

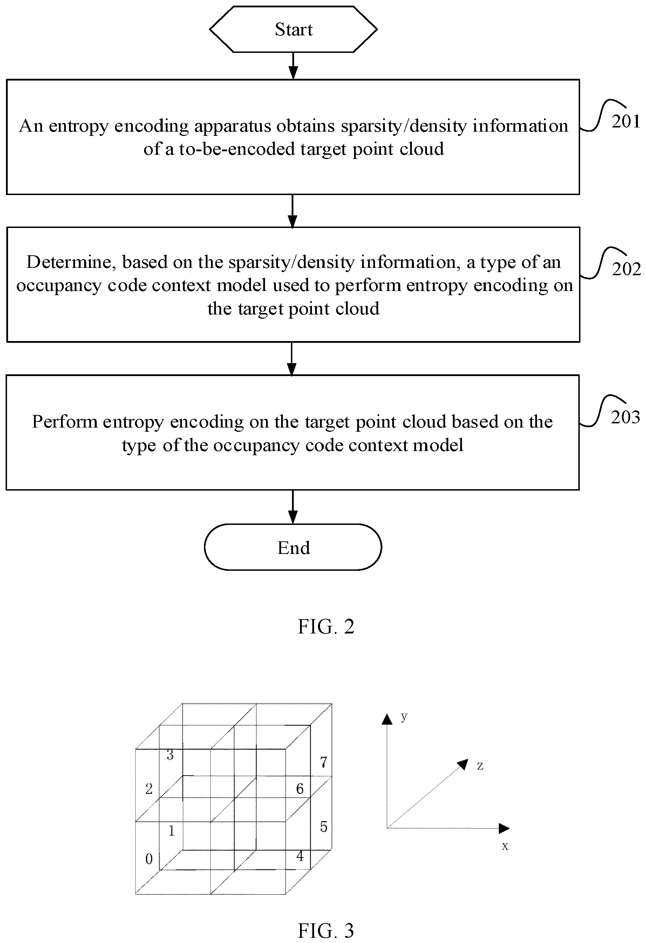

As shown in FIG. 2, an embodiment of this application provides an entropy encoding method, including the following steps.

Step 201: An entropy encoding apparatus obtains sparsity/density information of a to-be-encoded target point cloud.

It should be noted that the target point cloud in this application refers to a point cloud sequence or a point cloud slice in a point cloud sequence. Further, the point cloud sequence refers to a point cloud sequence obtained after a to-be-encoded point cloud sequence is preprocessed, and the preprocessing herein means one or more of coordinate translation, coordinate quantization, and removal of duplicate points.

Step 202: Determine, based on the sparsity/density information, a type of an occupancy code context model used to perform entropy encoding on the target point cloud.

Step 203: Perform entropy encoding on the target point cloud based on the type of the occupancy code context model.

It should be noted that the performing entropy encoding on the target point cloud in this embodiment of this application refers to performing entropy encoding on geometric information of the target point cloud.

It should be noted that the type of the occupancy code context model used to perform entropy encoding on the target point cloud is determined by using the sparsity/density information of the target point cloud, and then entropy encoding is performed. Therefore, the occupancy code context model can be properly selected, and optimal encoding efficiency is ensured.

Optionally, an available implementation of the foregoing step 201 is as follows:
Step 2011: Obtain size information of a bounding box corresponding to the target point cloud and information on the number of points included in the target point cloud.

It should be noted that the size information of the bounding box usually refers to information of a length, a width, and a height of the bounding box, that is, a size in three dimensions X, Y, and Z, and a volume of the bounding box can be determined by using the size information, where the volume of the bounding box is equal to a product of the length, width, and height.

Step 2012: Determine the sparsity/density information of the target point cloud based on the size information and the information on the number of points.

In this step, a volume occupied by a single point can be determined mainly based on the volume of the bounding box and the number of points included in the bounding box, and then sparsity/density of the point cloud is determined by using the volume occupied by the single point. A specific implementation may be:

determining a first volume based on the size information and the information on the number of points, where the first volume is an average volume occupied by each point in the target point cloud, in the bounding box; and determining the sparsity/density information of the target point cloud based on a relationship between the first volume and a preset threshold.

Further, an available implementation of determining the sparsity/density information by using the average volume occupied by each point, in the bounding box, includes at least one of the following:

A11. if the first volume is greater than the preset threshold, determining that the sparsity/density information of the target point cloud is a sparse point cloud; or
A12. if the first volume is less than or equal to the preset threshold, determining that the sparsity/density information of the target point cloud is a dense point cloud.

It should be noted that a result of comparing the first volume with the preset threshold may be represented in this application by introducing a variable S. A value of S is as follows:

$$S = \begin{cases} 1 & p > Th \\ 0 & p \le Th \end{cases}$$

where S is the sparsity/density information, p is the first volume, p = V/N, V is the volume of the bounding box corresponding to the target point cloud, N is the number of points included in the target point cloud, and Th is the preset threshold.

When S = 1, it indicates that the target point cloud is a sparse point cloud. When S = 0, it indicates that the target point cloud is a dense point cloud.

Certainly, the value of S in this application is only an example, and the foregoing uses S = 1 to indicate a sparse point cloud and uses S = 0 to indicate a dense point cloud. Optionally, it is also possible to use S = 0 to indicate a sparse point cloud and use S = 1 to indicate a dense point cloud. A specific value of S is not limited in this application.

It should be noted herein that the preset threshold may be determined in the following manner:

B 11. The preset threshold is determined by the entropy encoding apparatus.

Usually, the preset threshold is determined by a user, that is, the entropy encoding apparatus determines the preset threshold based on an input of the user.

Further, the entropy encoding apparatus may determine the preset threshold in the following manner:

B 111. A preset threshold set by the user is stored in the entropy encoding apparatus, and the preset threshold is directly used during entropy encoding.

B112. A plurality of thresholds are set in the entropy encoding apparatus, and form a list of thresholds, and the user may set a threshold used for entropy encoding this time.

In this case, the entropy encoding apparatus needs to notify an entropy decoding apparatus of the preset threshold used by the entropy encoding apparatus to perform entropy encoding, and the entropy decoding apparatus performs entropy decoding based on the same preset threshold. An available implementation is:

after the determining the sparsity/density information of the target point cloud based on a relationship between the first volume and a preset threshold, encoding first information into geometric slice header information of the target point cloud, where
the first information is the preset threshold or identification information corresponding to the preset threshold.

It should be noted that in this case, the entropy encoding apparatus needs to encode the preset threshold; and when the entropy encoding apparatus uses the manner of B 111, usually the first information refers to the preset threshold; or when the entropy encoding apparatus uses the manner of B 112, usually the first information refers to the identification information corresponding to the preset threshold. For example, the identification information is a number or an index of the preset threshold in the list of thresholds, and correspondingly the same list of thresholds is also set on the entropy decoding apparatus side, so that after the entropy decoding apparatus receives the identification information, the entropy decoding apparatus can know which threshold corresponds to the identification information.

B 12. The preset threshold is prescribed by a protocol.

It should be noted that in this case, both the entropy encoding apparatus and the entropy decoding apparatus know that the preset threshold is prescribed. In this case, the entropy encoding apparatus does not need to encode the preset threshold.

Further, it should be noted that an optional implementation of the foregoing step 202 includes at least one of the following:

C11. in a case that the sparsity/density information of the target point cloud is a sparse point cloud, determining that the type of the occupancy code context model used to perform entropy encoding on the target point cloud is occupancy code context model 1; or
C12. in a case that the sparsity/density information of the target point cloud is a dense point cloud, determining that the type of the occupancy code context model used to perform entropy encoding on the target point cloud is occupancy code context model 2.

It should be noted that in a current AVS point cloud reference software model V3.0, a spatial occupancy code is encoded by using a context-based adaptive binary arithmetic encoder with two sets of context models for sparse point cloud sequences (cat1A and cat2frame sequences) and dense point cloud sequences (cat1B and cat3 sequences). The following describes the two sets of context models in detail separately. For ease of description, FIG. 3 shows a coordinate system used in this application and spatial positions of eight subnodes, which are generated through division of an octree, relative to their parent node, that is, a current node.

1. Occupancy code context model 1

In a division manner of breadth-first traversal of the octree, neighbor information that can be obtained when a subnode of the current node is encoded includes neighboring subnodes in three directions: left, front, and lower, where the neighboring subnodes include three coplanar neighboring subnodes, three collinear neighboring subnodes, and one co-point neighboring node of the to-be-encoded subnode of the current node.

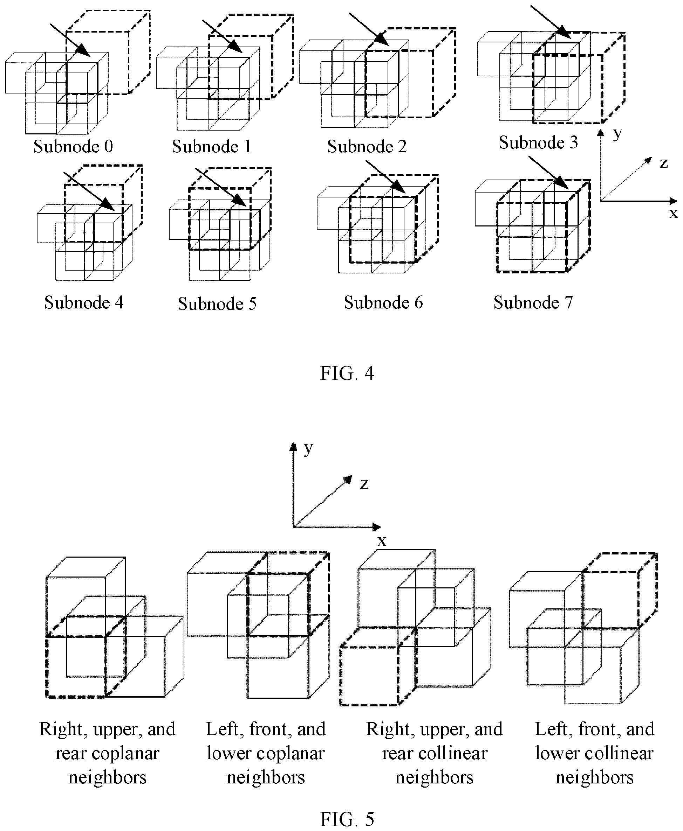

An occupancy code context model for a subnode level is designed as follows: For a to-be-encoded subnode level, find occupancy cases of three coplanar nodes, three collinear nodes, and one co-point node in the left, front, and lower directions on the same level as the to-be-encoded subnode level, and a node that is two node side lengths away from the current to-be-encoded subnode in a negative direction in a dimension with a shortest node side length. Using a shortest node side length in dimension X as an example, reference nodes selected for each subnode are shown in FIG. 4. A dashed-line box node is the current node, a node pointed to by an arrow is the current to-be-encoded subnode, and a solid-line box node is a reference node selected for each subnode.

The occupancy cases of the three coplanar nodes, the three collinear nodes, and the node that is two node side lengths away from the current to-be-encoded subnode in the negative direction in the dimension with the shortest node side length are considered in detail, and there are a total of $2^7 = 128$ occupancy cases for the seven nodes. If not all the seven nodes are unoccupied, there are $2^7 - 1 = 127$ cases, and one context is assigned to each case. If all the seven nodes are unoccupied, an occupancy case of a co-point neighboring node is considered. There are two possibilities for this co-point neighbor: occupied or unoccupied. One separate context is assigned to a case that this co-point neighboring node is occupied. If this co-point neighbor is also unoccupied, occupancy cases of neighbors at a current node level to be described subsequently are considered. To be specific, neighbors at the to-be-encoded subnode level correspond to a total of 127 + 2 - 1 = 128 contexts.

If all eight reference nodes at the same level as the to-be-encoded subnode are unoccupied, occupancy cases of four groups of neighbors at the current node level as shown in FIG. 5 are considered. Dashed-line box nodes are current nodes, and solid-line box nodes are neighboring nodes.

For the current node level, an occupancy code context is determined according to the following steps.

1. First consider three right, upper, and rear coplanar neighbors of the current node. There are a total of $2^3 = 8$ possibilities for occupancy cases of the three right, upper, and rear coplanar neighbors of the current node. One context is assigned to each case that not all the neighbors are unoccupied, and then a position of the to-be-encoded subnode in the current node is considered. Therefore, this group of neighboring nodes provides a total of (8 - 1) $\times$ 7 = 56 contexts. If all the three right, upper, and rear coplanar neighbors of the current node are unoccupied, remaining three groups of neighbors at the current node level continue to be considered.

2. Consider a distance between a recently occupied node and the current node.

A correspondence between specific neighboring node distribution and a distance is shown in Table 1.

**Table 1 Correspondence between an occupancy case at the current node level and the distance**

| Occupancy case at the current node level | Distance |
| --- | --- |
| Left, front, and lower coplanar neighbors are occupied, or right, upper, and rear collinear neighbors are occupied | 1 |
| Left, front, and lower coplanar neighbors, and right, upper, and rear collinear neighbors are all unoccupied, and left, front, and lower collinear neighbors are occupied | 2 |
| The four groups of neighbors at the current node level are all unoccupied | 3 |

From Table 1, it can be learned that the distance includes a total of three values. One context is assigned to each of the three values, and then the position of the to-be-encoded subnode in the current node is considered. There are a total of 3 $\times$ 8 = 24 contexts.

So far, a total of 128 + 56 + 24 = 208 contexts are assigned by spatial occupancy code context model 1.

2. Occupancy code context model 2

This set of contexts is configured by using a two-level context reference relationship. The first level is occupancy of coplanar neighboring nodes and collinear neighboring nodes of the current node at the current node level; and the second level is occupancy of coplanar neighboring nodes of the to-be-encoded subnode at the to-be-encoded subnode level.

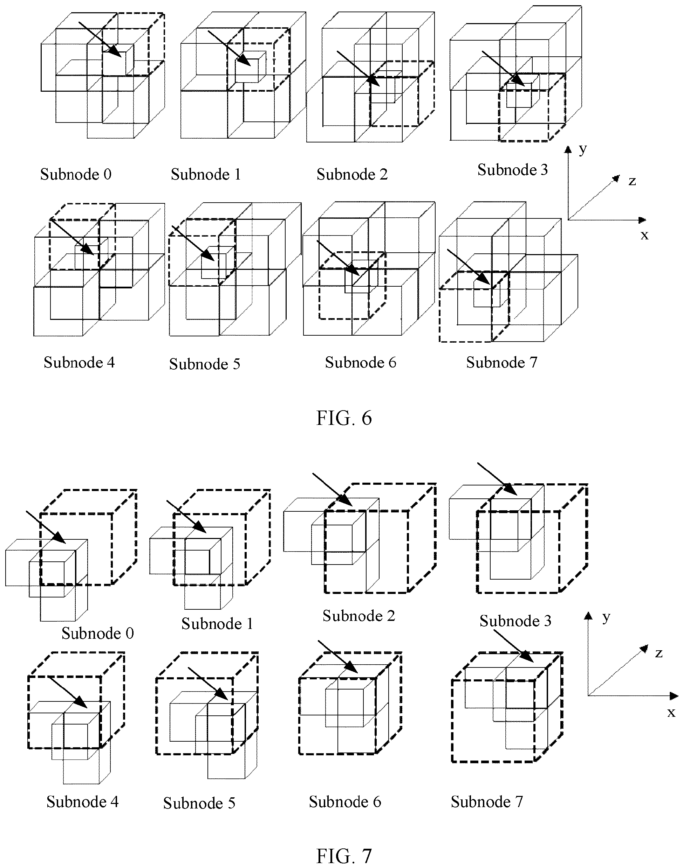

First, for each to-be-encoded subnode, six coplanar and collinear neighbors at the current node level may be obtained at a parent node level of the to-be-encoded subnode, that is, the current node level, as shown in FIG. 6. In FIG. 6, a dashed-line box node is the current node, a node pointed to by an arrow is the to-be-encoded subnode, and a solid-line box node is a coplanar or collinear neighbor of the current node. For three of the coplanar neighbors, considering each distribution case, there are a total of $2^3 = 8$ cases. For remaining three collinear neighbors, if only the number of occupied nodes among the three neighbors is calculated, there are four cases in total: 0, 1, 2, and 3. There are a total of $4 \times 8 = 32$ cases for a combination of the two, and one context is configured for each case. Therefore, a total of 32 contexts are provided for the current node level.

Then, for each to-be-encoded subnode, three left, front, and lower (in a negative direction of each axis) coplanar neighboring nodes at the same level as the subnode are found as reference nodes, as shown in FIG. 7. In FIG. 7, a dashed-line box node is the current node, a node pointed to by an arrow is the to-be-encoded subnode, and a solid-line box node is a coplanar neighbor at the same level as each subnode. There are a total of $2^3 = 8$ cases for the three coplanar neighboring nodes at the same level as the to-be-encoded subnode, and one context is assigned to each case. Therefore, a total of eight contexts are provided for the current node.

The two levels of contexts do not interfere with each other. Therefore, this set of context models provides a total of $32 \times 8 = 256$ contexts for dense point cloud sequences or point cloud slices.

Optionally, to reduce decoding complexity of the entropy decoding apparatus, the entropy encoding apparatus may directly encode the obtained sparsity/density information of the target point cloud or the type of the occupancy code context model used to perform entropy encoding on the target point cloud, and notify the entropy decoding apparatus. The entropy decoding apparatus may directly use the information notified by the entropy encoding apparatus to perform decoding, so that a decoding rate can be increased. A specific implementation is:

after the determining, based on the sparsity/density information, a type of an occupancy code context model used to perform entropy encoding on the target point cloud, encoding second information into geometric slice header information of the target point cloud, where
the second information includes the sparsity/density information of the target point cloud or the type of the occupancy code context model used to perform entropy encoding on the target point cloud.

In conclusion, this application provides a manner of adaptively selecting an occupancy code context model for a current node cloud slice or point cloud sequence by considering sparsity/density of the point cloud slice or point cloud sequence in the point cloud. The consideration of the sparsity/density is based on a volume of the point cloud slice or the point cloud sequence and the number of points included therein. Both of the two pieces of information, that is, the volume and the number of included points, may be obtained from the geometric slice header information. When a ratio of the volume of the point cloud to the number of included points is greater than a threshold, the point cloud is determined as a "sparse" point cloud, and context model 1 is selected for performing entropy encoding; or when a ratio of the volume of the point cloud to the number of included points is less than a threshold, the point cloud is determined as a "dense" point cloud, and context model 2 is selected for performing entropy encoding. In this manner, an appropriate occupancy code context model can be selected for performing entropy encoding on the point cloud sequence or each point cloud slice in the point cloud sequence under each condition, thereby obtaining a performance improvement. Experimental results show that encoding efficiency can be improved by using the method described in this application, as shown in the following Table 2, and performance of this application becomes better than the PCRM V3.0 under lossy conditions.

It should be noted herein that performance indicators for evaluating point cloud compression include two aspects: One is distortion of the point cloud, and the higher the distortion, the worse the objective quality of point cloud reconstruction; and the other is a size of a compressed bit stream. For lossless compression, that is, in a case that there is no distortion in the point cloud, only the size of the bit stream of the compressed point cloud is considered. For lossy compression, both aspects need to be considered. In both the two aspects, the size of the bit stream may be measured by the number of bits output after encoding. For evaluation of the distortion of the point cloud, the PCRM provides two corresponding distortion evaluation algorithms.

Generally, to evaluate performance of a compression algorithm, a rate distortion (RD) curve is usually used to determine a performance difference between two algorithms. An ideal goal of point cloud compression is that the bit stream becomes smaller and that an indicator for measuring objective quality, that is, a peak signal to noise ratio (Peak Signal to Noise Ratio, PSNR), becomes larger. However, this case rarely occurs. In a general case, the bit stream becomes smaller in comparison with an original method, but the PSNR, that is, quality of the point cloud, decreases, or the PSNR becomes higher but the bit stream becomes larger. To measure performance of a new method in the two cases, an indicator that takes the bit stream and the PSNR into comprehensive consideration is required. The AVS working group uses BD-Rate to comprehensively evaluate a bit rate and objective quality of a point cloud compression algorithm, and refines the BD-Rate in geometric and attribute aspects: BD-GeomRate and BD-AttrRate. A negative value of the BD-Rate indicates an increase in the performance of the new method compared with the original method, while a positive value of the BD-Rate indicates a decrease in the performance of the new method compared with the original method. Depending on whether an error is calculated by using a mean square error or a Hausdorff (Hausdorff) distance, there are two manners and results of calculating the PSNR, and the corresponding BD-Rate also has two results. One result calculated by using the mean square error is denoted as D1, and one result calculated by using Hausdorff is denoted as D1-H.

**Table 2 Results of performance comparison between this application and the PCRM V3.0 under lossy conditions**

| Sequence | BD-GeomRate (D1) | BD-GeomRate (D1-H) |
| --- | --- | --- |
| bridge_1mm | -5.4% | -5.4% |
| double_T_section_1mm | -2.2% | -2.2% |
| intersection1_1 mm | -2.4% | -2.3% |
| intersection2_1mm | -1.6% | -1.6% |
| straight_road_1mm | -1.7% | -1.7% |
| T_section_1mm | -2.0% | -1.9% |
| stanford_area_2_vox20 | -0.8% | -0.9% |
| stanford_area_4_vox20 | -1.1% | -1.1% |
| ford_01 | -1.3% | -1.3% |
| ford_02 | -1.7% | -1.7% |
| ford_03 | -1.3% | -1.3% |
| livox_01_all | -0.9% | -0.9% |
| livox_02_all | -0.8% | -0.8% |

It should be noted that the entropy encoding method provided in this embodiment of this application may be performed by an entropy encoding apparatus or a control module for performing the entropy encoding method in the entropy encoding apparatus. An entropy encoding apparatus provided in an embodiment of this application is described by assuming that the entropy encoding apparatus performs the entropy encoding method in this embodiment of this application.

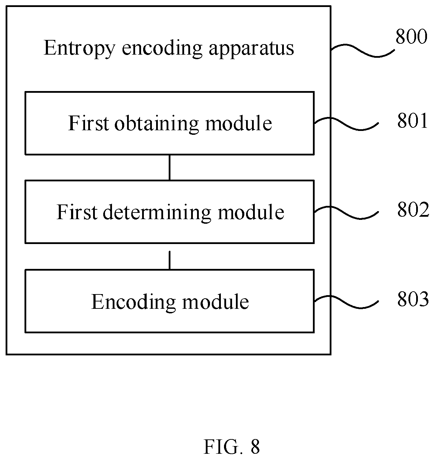

As shown in FIG. 8, an embodiment of this application provides an entropy encoding apparatus 800, including:

a first obtaining module 801, configured to obtain sparsity/density information of a to-be-encoded target point cloud;
a first determining module 802, configured to determine, based on the sparsity/density information, a type of an occupancy code context model used to perform entropy encoding on the target point cloud; and
an encoding module 803, configured to perform entropy encoding on the target point cloud based on the type of the occupancy code context model.

Optionally, the first obtaining module 801 includes:

a first obtaining unit, configured to obtain size information of a bounding box corresponding to the target point cloud and information on the number of points included in the target point cloud; and
a first determining unit, configured to determine the sparsity/density information of the target point cloud based on the size information and the information on the number of points.

Optionally, the first determining unit includes:

a first determining subunit, configured to determine a first volume based on the size information and the information on the number of points, where the first volume is an average volume occupied by each point in the target point cloud, in the bounding box; and
a second determining subunit, configured to determine the sparsity/density information of the target point cloud based on a relationship between the first volume and a preset threshold.

Optionally, the second determining subunit is configured to implement at least one of the following:

if the first volume is greater than the preset threshold, determining that the sparsity/density information of the target point cloud is a sparse point cloud; or
if the first volume is less than or equal to the preset threshold, determining that the sparsity/density information of the target point cloud is a dense point cloud.

Optionally, the preset threshold is determined by the entropy encoding apparatus or prescribed by a protocol.
Optionally, in a case that the preset threshold is determined by the entropy encoding apparatus, after the second determining subunit determines the sparsity/density information of the target point cloud based on the relationship between the first volume and the preset threshold, the apparatus further includes:

a first encoding module, configured to encode first information into geometric slice header information of the target point cloud, where
the first information is the preset threshold or identification information corresponding to the preset threshold.

Optionally, the first determining module 802 is configured to implement at least one of the following:

in a case that the sparsity/density information of the target point cloud is a sparse point cloud, determining that the type of the occupancy code context model used to perform entropy encoding on the target point cloud is occupancy code context model 1; or
in a case that the sparsity/density information of the target point cloud is a dense point cloud, determining that the type of the occupancy code context model used to perform entropy encoding on the target point cloud is occupancy code context model 2.

Optionally, after the first determining module 802 determines, based on the sparsity/density information, the type of the occupancy code context model used to perform entropy encoding on the target point cloud, the apparatus further includes:

a second encoding module, configured to encode second information into geometric slice header information of the target point cloud, where
the second information includes the sparsity/density information of the target point cloud or the type of the occupancy code context model used to perform entropy encoding on the target point cloud.

Optionally, the target point cloud is a point cloud sequence or a point cloud slice in a point cloud sequence.
It should be noted that the type of the occupancy code context model used to perform entropy encoding on the target point cloud is determined by using the sparsity/density information of the target point cloud. Therefore, the occupancy code context model can be properly selected, and optimal encoding efficiency is ensured.
The entropy encoding apparatus in this embodiment of this application may be an apparatus, an apparatus with an operating system or an electronic device, or may be a component, an integrated circuit, or a chip in a terminal. The apparatus or the electronic device may be a mobile terminal, or may be a nonmobile terminal. For example, the mobile terminal may include but is not limited to a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicular user equipment (VUE), or pedestrian user equipment (PUE). The wearable device includes a smart watch, a smart band, an earphone, glasses, or the like. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.
The entropy encoding apparatus provided in this embodiment of this application can implement each process implemented by the method embodiment in FIG. 2, with the same technical effect achieved. To avoid repetition, details are not described herein again.
An embodiment of this application further provides an entropy encoding apparatus, including a processor and a communications interface. The processor is configured to: obtain sparsity/density information of a to-be-encoded target point cloud;

determine, based on the sparsity/density information, a type of an occupancy code context model used to perform entropy encoding on the target point cloud; and

perform entropy encoding on the target point cloud based on the type of the occupancy code context model.

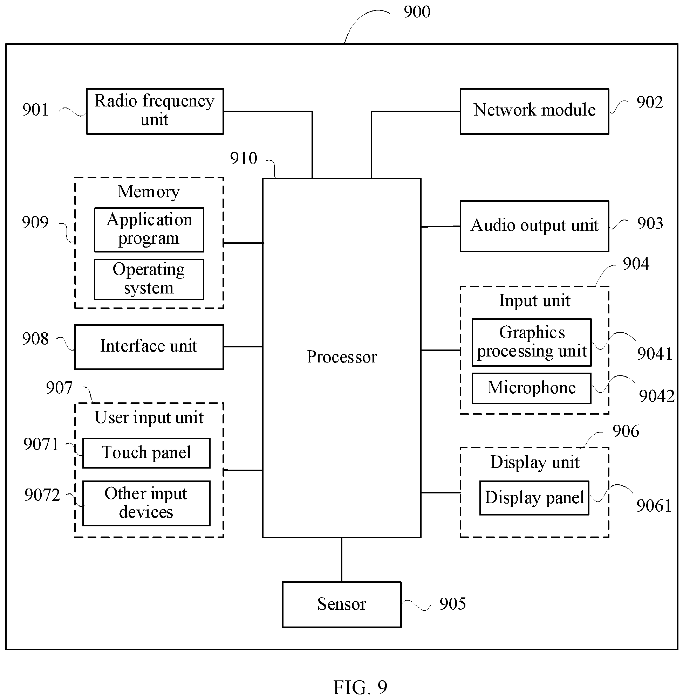

The entropy encoding apparatus embodiment corresponds to the foregoing entropy encoding method embodiment, and each implementation process and implementation of the foregoing method embodiment can be applied to the apparatus embodiment, with the same technical effect achieved. Specifically, FIG. 9 is a schematic diagram of a hardware structure of an entropy encoding apparatus for implementing an embodiment of this application.

The entropy encoding apparatus 900 includes but is not limited to at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the entropy encoding apparatus 900 may further include a power supply (such as a battery) for supplying power to the components. The power supply may be logically connected to the processor 910 through a power management system. In this way, functions such as charge management, discharge management, and power consumption management are implemented by using the power management system. The entropy encoding apparatus structure shown in FIG. 9 does not constitute a limitation on the entropy encoding apparatus. The entropy encoding apparatus may include more or fewer components than those shown in the figure, or some components are combined, or component arrangements are different. Details are not described herein again.

It should be understood that, in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a switch key), a trackball, a mouse, and a joystick. Details are not described herein again.

In this embodiment of this application, after receiving downlink data from a network-side device, the radio frequency unit 901 sends the downlink data to the processor 910 for processing, and in addition, sends uplink data to the network-side device. Usually, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may primarily include a program or instruction storage area and a data storage area. The program or instruction storage area may store an operating system, an application program or instructions (such as an audio play function and an image play function) required by at least one function, and the like. In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, the processor 910 may integrate an application processor and a modem processor. The application processor mainly processes the operating system, a user interface, an application program, or instructions. The modem processor mainly processes wireless communication. For example, the modem processor is a baseband processor. It may be understood that the modem processor may alternatively be not integrated in the processor 910.

The processor 910 is configured to:

obtain sparsity/density information of a to-be-encoded target point cloud;

determine, based on the sparsity/density information, a type of an occupancy code context model used to perform entropy encoding on the target point cloud; and

perform entropy encoding on the target point cloud based on the type of the occupancy code context model.

In this embodiment of this application, the entropy encoding apparatus determines, by using the sparsity/density information of the target point cloud, the type of the occupancy code context model used to perform entropy encoding on the target point cloud. Therefore, the occupancy code context model can be properly selected, and optimal encoding efficiency is ensured.

Optionally, the processor 910 is further configured to:

obtain size information of a bounding box corresponding to the target point cloud and information on the number of points included in the target point cloud; and

determine the sparsity/density information of the target point cloud based on the size information and the information on the number of points.

Optionally, the processor 910 is further configured to:

determine a first volume based on the size information and the information on the number of points, where the first volume is an average volume occupied by each point in the target point cloud, in the bounding box; and

determine the sparsity/density information of the target point cloud based on a relationship between the first volume and a preset threshold.

Optionally, the processor 910 is further configured to implement at least one of the following:

if the first volume is greater than the preset threshold, determining that the sparsity/density information of the target point cloud is a sparse point cloud; or

if the first volume is less than or equal to the preset threshold, determining that the sparsity/density information of the target point cloud is a dense point cloud.

Optionally, the preset threshold is determined by the entropy encoding apparatus or prescribed by a protocol.

Optionally, the processor 910 is further configured to:

encode first information into geometric slice header information of the target point cloud, where

the first information is the preset threshold or identification information corresponding to the preset threshold.

Optionally, the processor 910 is further configured to implement at least one of the following:

in a case that the sparsity/density information of the target point cloud is a sparse point cloud, determining that the type of the occupancy code context model used to perform entropy encoding on the target point cloud is occupancy code context model 1; or

in a case that the sparsity/density information of the target point cloud is a dense point cloud, determining that the type of the occupancy code context model used to perform entropy encoding on the target point cloud is occupancy code context model 2.

Optionally, the processor 910 is further configured to:

encode second information into geometric slice header information of the target point cloud, where

the second information includes the sparsity/density information of the target point cloud or the type of the occupancy code context model used to perform entropy encoding on the target point cloud.

Optionally, the target point cloud is a point cloud sequence or a point cloud slice in a point cloud sequence.

Preferably, an embodiment of this application further provides an entropy encoding apparatus, including a processor, a memory, and a program or instructions stored in the memory and capable of running on the processor. When the program or instructions are executed by the processor, each process of the foregoing embodiment of the entropy encoding method is implemented, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the entropy encoding method is implemented, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

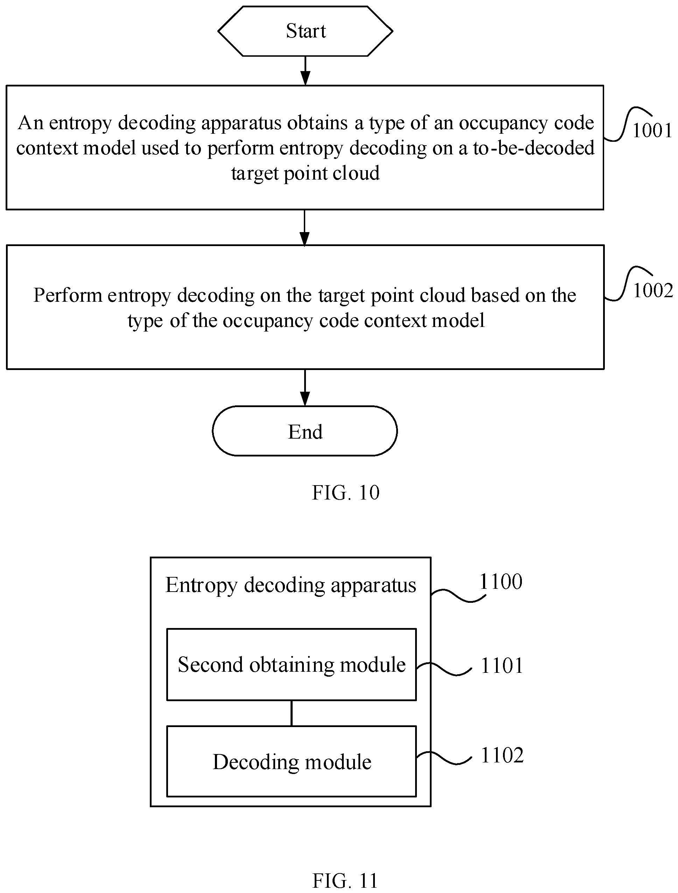

As shown in FIG. 10, an embodiment of this application further provides an entropy decoding method, including the following steps.

Step 1001: An entropy decoding apparatus obtains a type of an occupancy code context model used to perform entropy decoding on a to-be-decoded target point cloud, where

the type of the occupancy code context model used to perform entropy decoding on the target point cloud is determined by sparsity/density information of the target point cloud.

It should be noted that the target point cloud in this application refers to a point cloud sequence or a point cloud slice in a point cloud sequence. Further, the point cloud sequence refers to a point cloud sequence obtained after a to-be-encoded point cloud sequence is preprocessed, and the preprocessing herein means one or more of coordinate translation, coordinate quantization, and removal of duplicate points.

Step 1002: Perform entropy decoding on the target point cloud based on the type of the occupancy code context model.

It should be noted that the performing entropy decoding on the target point cloud in this embodiment of this application refers to performing entropy decoding on geometric information of the target point cloud.

It should be noted that the type of the occupancy code context model used to perform entropy decoding on the target point cloud is determined by using the sparsity/density information of the target point cloud, and then entropy decoding is performed. Therefore, the occupancy code context model can be properly selected, and optimal decoding efficiency is ensured.

Optionally, an available implementation of step 1001 is as follows:

Step 10011: Obtain geometric slice header information of the target point cloud.
Step 10012: Determine, based on second information in the geometric slice header information, the type of the occupancy code context model used to perform entropy decoding on the target point cloud, where
the second information includes the sparsity/density information of the target point cloud or a type of an occupancy code context model used to perform entropy encoding on the target point cloud.

It should be noted that in this case, if the geometric slice header information includes the type of the occupancy code context model used to perform entropy encoding on the target point cloud, the entropy decoding apparatus does not need to separately calculate the type of the occupancy code context model any longer, but may directly determine that the type of the occupancy code context model used to perform entropy decoding on the target point cloud is the same as the type of the occupancy code context model used to perform entropy encoding on the target point cloud, so that decoding efficiency can be improved; or if the geometric slice header information includes the sparsity/density information of the target point cloud, the entropy decoding apparatus may directly use the sparsity/density information of the target point cloud to determine the type of the occupancy code context model used to perform entropy decoding on the target point cloud, and does not need to separately calculate the sparsity/density information of the target point cloud any longer, so that decoding efficiency can be improved.

Specifically, in this case, an available implementation of determining, based on the sparsity/density information of the target point cloud, the type of the occupancy code context model used to perform entropy decoding on the target point cloud includes at least one of the following:

D 11. in a case that the sparsity/density information of the target point cloud is a sparse point cloud, determining that the type of the occupancy code context model used to perform entropy decoding on the target point cloud is occupancy code context model 1; or
D12. in a case that the sparsity/density information of the target point cloud is a dense point cloud, determining that the type of the occupancy code context model used to perform entropy decoding on the target point cloud is occupancy code context model 2.

It should be noted that, for occupancy code context model 1 and occupancy code context model 2 in this embodiment, reference may be made to the descriptions of occupancy code context model 1 and occupancy code context model 2 in the foregoing embodiment. Details are not described herein again.

Optionally, another available implementation of step 1001 is as follows:

Step 10013: Obtain the sparsity/density information of the target point cloud.
Step 10014: Determine, based on the sparsity/density information of the target point cloud, the type of the occupancy code context model used to perform entropy decoding on the target point cloud.

Optionally, an available implementation of the foregoing step 10013 is as follows:
Step 100131: Obtain size information of a bounding box corresponding to the target point cloud and information on the number of points included in the target point cloud.

It should be noted that the size information of the bounding box usually refers to information of a length, a width, and a height of the bounding box, that is, a size in three dimensions X, Y, and Z, and a volume of the bounding box can be determined by using the size information, where the volume of the bounding box is equal to a product of the length, width, and height.

Step 100132: Determine the sparsity/density information of the target point cloud based on the size information and the information on the number of points.

In this step, a volume occupied by a single point can be determined mainly based on the volume of the bounding box and the number of points included in the bounding box, and then sparsity/density of the point cloud is determined by using the volume occupied by the single point. A specific implementation may be:

determining a first volume based on the size information and the information on the number of points, where the first volume is an average volume occupied by each point in the target point cloud, in the bounding box; and determining the sparsity/density information of the target point cloud based on a relationship between the first volume and a preset threshold.

Further, an available implementation of determining the sparsity/density information by using the average volume occupied by each point, in the bounding box, includes at least one of the following:

E11. if the first volume is greater than the preset threshold, determining that the sparsity/density information of the target point cloud is a sparse point cloud; or
E12. if the first volume is less than or equal to the preset threshold, determining that the sparsity/density information of the target point cloud is a dense point cloud.

It should be noted that a result of comparing the first volume with the preset threshold may be represented in this application by introducing a variable S. A value of S is as follows:

$$S = \begin{cases} 1 & p > Th \\ 0 & p \leq Th \end{cases}$$

where S is the sparsity/density information, p is the first volume, p = V/N, V is the volume of the bounding box corresponding to the target point cloud, N is the number of points included in the target point cloud, and Th is the preset threshold.

When S = 1, it indicates that the target point cloud is a sparse point cloud. When S = 0, it indicates that the target point cloud is a dense point cloud.

Certainly, the value of S in this embodiment of this application is only an example, and the foregoing uses S = 1 to indicate a sparse point cloud and uses S = 0 to indicate a dense point cloud. Optionally, it is also possible to use S = 0 to indicate a sparse point cloud and use S = 1 to indicate a dense point cloud. A specific value of S is not limited in this application.

Specifically, in this case, an available implementation of determining, based on the sparsity/density information of the target point cloud, the type of the occupancy code context model used to perform entropy decoding on the target point cloud includes at least one of the following:

E11. in a case that the sparsity/density information of the target point cloud is a sparse point cloud, determining that the type of the occupancy code context model used to perform entropy decoding on the target point cloud is occupancy code context model 1; or
E12. in a case that the sparsity/density information of the target point cloud is a dense point cloud, determining that the type of the occupancy code context model used to perform entropy decoding on the target point cloud is occupancy code context model 2.

Optionally, before the determining the sparsity/density information of the target point cloud based on a relationship between the first volume and a preset threshold, the method further includes:

obtaining the preset threshold, where
the preset threshold is determined by the entropy decoding apparatus or prescribed by a protocol.

In a case that the preset threshold is determined by the entropy decoding apparatus, usually, the preset threshold is determined by a user. To be specific, an entropy encoding apparatus determines the preset threshold based on an input of the user. In a case that the preset threshold is prescribed by the protocol, both the entropy encoding apparatus and the entropy decoding apparatus know that the preset threshold is prescribed. In this case, the entropy encoding apparatus does not need to encode the preset threshold.

Optionally, in the case that the preset threshold is determined by the entropy decoding apparatus, the obtaining the preset threshold includes:

obtaining geometric slice header information of the target point cloud; and

obtaining the preset threshold based on first information in the geometric slice header information, where the first information is the preset threshold or identification information corresponding to the preset threshold.

It should be noted that the entropy encoding apparatus may determine the preset threshold in the following manner:

F111. A preset threshold set by the user is stored in the entropy encoding apparatus, and the preset threshold is directly used during entropy encoding.

F112. A plurality of thresholds are set in the entropy encoding apparatus, and form a list of thresholds, and the user may set a threshold used for entropy encoding this time.

In this case, the entropy encoding apparatus needs to notify the entropy decoding apparatus of the preset threshold used by the entropy encoding apparatus to perform entropy encoding, and the entropy decoding apparatus performs entropy decoding based on the same preset threshold; and when the entropy encoding apparatus uses the manner of B111, usually the first information refers to the preset threshold; or when the entropy encoding apparatus uses the manner of B112, usually the first information refers to the identification information corresponding to the preset threshold. For example, the identification information is a number or an index of the preset threshold in the list of thresholds, and correspondingly the same list of thresholds is also set on the entropy decoding apparatus side, so that after the entropy decoding apparatus receives the identification information, the entropy decoding apparatus can know which threshold corresponds to the identification information.

It should be noted that the type of the occupancy code context model used to perform entropy decoding on the target point cloud is determined by using the sparsity/density information of the target point cloud. Therefore, the occupancy code context model can be properly selected, and optimal decoding efficiency is ensured.

As shown in FIG. 11, an embodiment of this application further provides an entropy decoding apparatus 1100, including:

a second obtaining module 1101, configured to obtain a type of an occupancy code context model used to perform entropy decoding on a to-be-decoded target point cloud, where the type of the occupancy code context model used to perform entropy decoding on the target point cloud is determined by sparsity/density information of the target point cloud; and

a decoding module 1102, configured to perform entropy decoding on the target point cloud based on the type of the occupancy code context model.

Optionally, the second obtaining module 1101 includes:

a second obtaining unit, configured to obtain geometric slice header information of the target point cloud; and

a second determining unit, configured to determine, based on second information in the geometric slice header information, the type of the occupancy code context model used to perform entropy decoding on the target point cloud, where

the second information includes the sparsity/density information of the target point cloud or a type of an occupancy code context model used to perform entropy encoding on the target point cloud.

Optionally, the second information includes the type of the occupancy code context model used to perform entropy encoding on the target point cloud, and the second determining unit is configured to:

determine that the type of the occupancy code context model used to perform entropy decoding on the target point cloud is the same as the type of the occupancy code context model used to perform entropy encoding on the target point cloud.

Optionally, the second information includes the sparsity/density information of the target point cloud, and the second determining unit is configured to:

determine, based on the sparsity/density information of the target point cloud, the type of the occupancy code context model used to perform entropy decoding on the target point cloud.

Optionally, the second obtaining module 1101 includes:

a third obtaining unit, configured to obtain the sparsity/density information of the target point cloud; and

a third determining unit, configured to determine, based on the sparsity/density information of the target point cloud, the type of the occupancy code context model used to perform entropy decoding on the target point cloud.

Optionally, the third obtaining unit includes:

a first obtaining subunit, configured to obtain size information of a bounding box corresponding to the target point cloud and information on the number of points included in the target point cloud; and
a second determining subunit, configured to determine the sparsity/density information of the target point cloud based on the size information and the information on the number of points.

Optionally, the second determining subunit is configured to:

determine a first volume based on the size information and the information on the number of points, where the first volume is an average volume occupied by each point in the target point cloud, in the bounding box; and
determine the sparsity/density information of the target point cloud based on a relationship between the first volume and a preset threshold.

Optionally, an implementation of the determining the sparsity/density information of the target point cloud based on a relationship between the first volume and a preset threshold includes at least one of the following:

if the first volume is greater than the preset threshold, determining that the sparsity/density information of the target point cloud is a sparse point cloud; or
if the first volume is less than or equal to the preset threshold, determining that the sparsity/density information of the target point cloud is a dense point cloud.

Optionally, before the second determining subunit determines the sparsity/density information of the target point cloud based on the relationship between the first volume and the preset threshold, the apparatus further includes:

a third obtaining module, configured to obtain the preset threshold, where
the preset threshold is determined by the entropy decoding apparatus or prescribed by a protocol.

Optionally, in a case that the preset threshold is determined by the entropy decoding apparatus, the third obtaining module includes:

a fourth obtaining unit, configured to obtain geometric slice header information of the target point cloud; and
a fifth obtaining unit, configured to obtain the preset threshold based on first information in the geometric slice header information, where
the first information is the preset threshold or identification information corresponding to the preset threshold.

Optionally, an implementation of the determining, based on the sparsity/density information of the target point cloud, the type of the occupancy code context model used to perform entropy decoding on the target point cloud includes at least one of the following:

in a case that the sparsity/density information of the target point cloud is a sparse point cloud, determining that the type of the occupancy code context model used to perform entropy decoding on the target point cloud is occupancy code context model 1; or
in a case that the sparsity/density information of the target point cloud is a dense point cloud, determining that the type of the occupancy code context model used to perform entropy decoding on the target point cloud is occupancy code context model 2.

Optionally, the target point cloud is a point cloud sequence or a point cloud slice in a point cloud sequence.
It should be noted that the type of the occupancy code context model used to perform entropy decoding on the target point cloud is determined by using the sparsity/density information of the target point cloud. Therefore, the occupancy code context model can be properly selected, and optimal decoding efficiency is ensured.
Preferably, an embodiment of this application further provides an entropy decoding apparatus, including a processor, a memory, and a program or instructions stored in the memory and capable of running on the processor. When the program or instructions are executed by the processor, each process of the foregoing embodiment of the entropy decoding method is implemented, with the same technical effect achieved. To avoid repetition, details are not described herein again.
An embodiment of this application further provides a readable storage medium. The computer-readable storage medium stores a program or instructions. When the program or instructions are executed by a processor, each process of the foregoing embodiment of the entropy decoding method is implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides an entropy decoding apparatus, including a processor and a communications interface. The processor is configured to: obtain a type of an occupancy code context model used to perform entropy decoding on a to-be-decoded target point cloud, where the type of the occupancy code context model used to perform entropy decoding on the target point cloud is determined by sparsity/density information of the target point cloud; and perform entropy decoding on the target point cloud based on the type of the occupancy code context model.

The entropy decoding apparatus embodiment corresponds to the foregoing entropy decoding method embodiment, and each implementation process and implementation of the foregoing method embodiment can be applied to the entropy decoding apparatus embodiment, with the same technical effect achieved.

Specifically, an embodiment of this application further provides an entropy decoding apparatus. Specifically, a structure of the entropy decoding apparatus is similar to a structure of the entropy encoding apparatus shown in FIG. 9. Details are not described herein again.

Optionally, the processor is configured to:

obtain a type of an occupancy code context model used to perform entropy decoding on a to-be-decoded target point cloud, where the type of the occupancy code context model used to perform entropy decoding on the target point cloud is determined by sparsity/density information of the target point cloud; and
perform entropy decoding on the target point cloud based on the type of the occupancy code context model.

Optionally, the processor is further configured to:

obtain geometric slice header information of the target point cloud; and
determine, based on second information in the geometric slice header information, the type of the occupancy code context model used to perform entropy decoding on the target point cloud, where
the second information includes the sparsity/density information of the target point cloud or a type of an occupancy code context model used to perform entropy encoding on the target point cloud.

Optionally, the processor is further configured to:
determine that the type of the occupancy code context model used to perform entropy decoding on the target point cloud is the same as the type of the occupancy code context model used to perform entropy encoding on the target point cloud.

Optionally, the processor is further configured to:
determine, based on the sparsity/density information of the target point cloud, the type of the occupancy code context model used to perform entropy decoding on the target point cloud.

Optionally, the processor is further configured to:

obtain the sparsity/density information of the target point cloud; and
determine, based on the sparsity/density information of the target point cloud, the type of the occupancy code context model used to perform entropy decoding on the target point cloud.

Optionally, the processor is further configured to:

obtain size information of a bounding box corresponding to the target point cloud and information on the number of points included in the target point cloud; and
determine the sparsity/density information of the target point cloud based on the size information and the information on the number of points.

Optionally, the processor is further configured to:

determine a first volume based on the size information and the information on the number of points, where the first volume is an average volume occupied by each point in the target point cloud, in the bounding box; and
determine the sparsity/density information of the target point cloud based on a relationship between the first volume and a preset threshold.

Optionally, the processor is further configured to implement at least one of the following:

if the first volume is greater than the preset threshold, determining that the sparsity/density information of the target point cloud is a sparse point cloud; or
if the first volume is less than or equal to the preset threshold, determining that the sparsity/density information of the target point cloud is a dense point cloud.

Optionally, the processor is further configured to:

obtain the preset threshold, where
the preset threshold is determined by the entropy decoding apparatus or prescribed by a protocol.

Optionally, the processor is further configured to:

obtain geometric slice header information of the target point cloud; and
obtain the preset threshold based on first information in the geometric slice header information, where
the first information is the preset threshold or identification information corresponding to the preset threshold.

Optionally, the processor is further configured to implement at least one of the following:

in a case that the sparsity/density information of the target point cloud is a sparse point cloud, determining that the type of the occupancy code context model used to perform entropy decoding on the target point cloud is occupancy code context model 1; or
in a case that the sparsity/density information of the target point cloud is a dense point cloud, determining that the type of the occupancy code context model used to perform entropy decoding on the target point cloud is occupancy code context model 2.

Optionally, the target point cloud is a point cloud sequence or a point cloud slice in a point cloud sequence.

It should be noted that the entropy encoding apparatus and the entropy decoding apparatus in the embodiments of this application may be disposed in a same device. In other words, the device can implement both an entropy encoding function and an entropy decoding function.

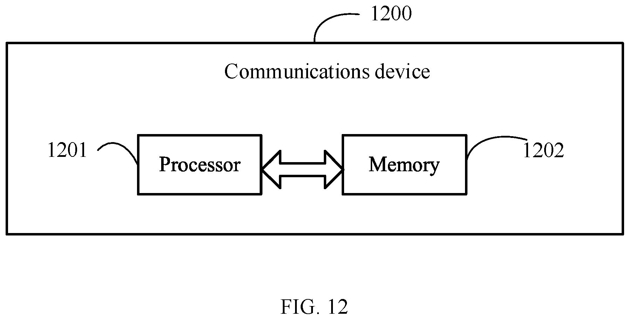

Optionally, as shown in FIG. 12, an embodiment of this application further provides an encoding/decoding apparatus 1200, including a processor 1201, a memory 1202, and a program or instructions stored in the memory 1202 and capable of running on the processor 1201. For example, when the communications device 1200 is an entropy encoding apparatus, and the program or instructions are executed by the processor 1201, each process of the foregoing embodiment of the entropy encoding method is implemented, with the same technical effect achieved. When the communications device 1200 is an entropy decoding apparatus, and the program or instructions are executed by the processor 1201, each process of the foregoing embodiment of the entropy decoding method is implemented, with the same technical effect achieved. To avoid repetition, details are not described herein again.

In addition, an embodiment of this application provides a chip. The chip includes a processor and a communications interface. The communications interface is coupled to the processor. The processor is configured to run a program or instructions to implement each process of the foregoing embodiment of the entropy encoding method or the entropy decoding method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program product. The computer program product is stored in a non-transitory storage medium. The computer program product is executed by at least one processor to implement each process of the foregoing embodiment of the entropy encoding method or the entropy decoding method, with the same technical effect achieved. To avoid repetition, details are not described herein again.

An embodiment of this application further provides a communications device, configured to perform each process of the foregoing embodiment of the entropy encoding method or the entropy decoding method, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for enabling a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. An entropy encoding method, comprising:

   obtaining, by an entropy encoding apparatus, sparsity/density information of a to-be-encoded target point cloud;
   determining, based on the sparsity/density information, a type of an occupancy code context model used to perform entropy encoding on the target point cloud; and
   performing entropy encoding on the target point cloud based on the type of the occupancy code context model.

2. The method according to claim 1, wherein the obtaining sparsity/density information of a to-be-encoded target point cloud comprises:

   obtaining size information of a bounding box corresponding to the target point cloud and information on the number of points comprised in the target point cloud; and
   determining the sparsity/density information of the target point cloud based on the size information and the information on the number of points.

3. The method according to claim 2, wherein the determining the sparsity/density information of the target point cloud based on the size information and the information on the number of points comprises:

   determining a first volume based on the size information and the information on the number of points, wherein the first volume is an average volume occupied by each point in the target point cloud, in the bounding box; and
   determining the sparsity/density information of the target point cloud based on a relationship between the first volume and a preset threshold.

4. The method according to claim 3, wherein the determining the sparsity/density information of the target point cloud based on a relationship between the first volume and a preset threshold comprises at least one of the following:

   if the first volume is greater than the preset threshold, determining that the sparsity/density information of the target point cloud is a sparse point cloud; or
   if the first volume is less than or equal to the preset threshold, determining that the sparsity/density information of the target point cloud is a dense point cloud.

5. The method according to claim 3, wherein the preset threshold is determined by the entropy encoding apparatus or prescribed by a protocol.

6. The method according to claim 3, wherein in a case that the preset threshold is determined by the entropy encoding apparatus, after the determining the sparsity/density information of the target point cloud based on a relationship between the first volume and a preset threshold, the method further comprises:

   encoding first information into geometric slice header information of the target point cloud, wherein

the first information is the preset threshold or identification information corresponding to the preset threshold.

7. The method according to claim 1, wherein the determining, based on the sparsity/density information, a type of an occupancy code context model used to perform entropy encoding on the target point cloud comprises at least one of the following:

in a case that the sparsity/density information of the target point cloud is a sparse point cloud, determining that the type of the occupancy code context model used to perform entropy encoding on the target point cloud is occupancy code context model 1; or
in a case that the sparsity/density information of the target point cloud is a dense point cloud, determining that the type of the occupancy code context model used to perform entropy encoding on the target point cloud is occupancy code context model 2.

8. The method according to claim 1, wherein after the determining, based on the sparsity/density information, a type of an occupancy code context model used to perform entropy encoding on the target point cloud, the method further comprises:

encoding second information into geometric slice header information of the target point cloud, wherein the second information comprises the sparsity/density information of the target point cloud or the type of the occupancy code context model used to perform entropy encoding on the target point cloud.

9. The method according to any one of claims 1 to 8, wherein the target point cloud is a point cloud sequence or a point cloud slice in a point cloud sequence.

10. An entropy decoding method, comprising:

obtaining, by an entropy decoding apparatus, a type of an occupancy code context model used to perform entropy decoding on a to-be-decoded target point cloud, wherein the type of the occupancy code context model used to perform entropy decoding on the target point cloud is determined by sparsity/density information of the target point cloud; and
performing entropy decoding on the target point cloud based on the type of the occupancy code context model.

11. The method according to claim 10, wherein the obtaining a type of an occupancy code context model used to perform entropy decoding on a to-be-decoded target point cloud comprises:

obtaining geometric slice header information of the target point cloud; and
determining, based on second information in the geometric slice header information, the type of the occupancy code context model used to perform entropy decoding on the target point cloud, wherein
the second information comprises the sparsity/density information of the target point cloud or a type of an occupancy code context model used to perform entropy encoding on the target point cloud.

12. The method according to claim 11, wherein the second information comprises the type of the occupancy code context model used to perform entropy encoding on the target point cloud, and the determining the type of the occupancy code context model used to perform entropy decoding on the target point cloud comprises:
determining that the type of the occupancy code context model used to perform entropy decoding on the target point cloud is the same as the type of the occupancy code context model used to perform entropy encoding on the target point cloud.

13. The method according to claim 11, wherein the second information comprises the sparsity/density information of the target point cloud, and the determining the type of the occupancy code context model used to perform entropy decoding on the target point cloud comprises:
determining, based on the sparsity/density information of the target point cloud, the type of the occupancy code context model used to perform entropy decoding on the target point cloud.

14. The method according to claim 10, wherein the obtaining a type of an occupancy code context model used to perform entropy decoding on a to-be-decoded target point cloud comprises:

obtaining the sparsity/density information of the target point cloud; and

determining, based on the sparsity/density information of the target point cloud, the type of the occupancy code context model used to perform entropy decoding on the target point cloud.

15. The method according to claim 14, wherein the obtaining the sparsity/density information of the target point cloud comprises:

   obtaining size information of a bounding box corresponding to the target point cloud and information on the number of points comprised in the target point cloud; and
   determining the sparsity/density information of the target point cloud based on the size information and the information on the number of points.

16. The method according to claim 15, wherein the determining the sparsity/density information of the target point cloud based on the size information and the information on the number of points comprises:

   determining a first volume based on the size information and the information on the number of points, wherein the first volume is an average volume occupied by each point in the target point cloud, in the bounding box; and
   determining the sparsity/density information of the target point cloud based on a relationship between the first volume and a preset threshold.

17. The method according to claim 16, wherein the determining the sparsity/density information of the target point cloud based on a relationship between the first volume and a preset threshold comprises at least one of the following:

   if the first volume is greater than the preset threshold, determining that the sparsity/density information of the target point cloud is a sparse point cloud; or
   if the first volume is less than or equal to the preset threshold, determining that the sparsity/density information of the target point cloud is a dense point cloud.

18. The method according to claim 16, wherein before the determining the sparsity/density information of the target point cloud based on a relationship between the first volume and a preset threshold, the method further comprises:

   obtaining the preset threshold, wherein
   the preset threshold is determined by the entropy decoding apparatus or prescribed by a protocol.

19. The method according to claim 18, wherein in a case that the preset threshold is determined by the entropy decoding apparatus, the obtaining the preset threshold comprises:

   obtaining geometric slice header information of the target point cloud; and
   obtaining the preset threshold based on first information in the geometric slice header information, wherein the first information is the preset threshold or identification information corresponding to the preset threshold.

20. The method according to claim 13 or 14, wherein the determining, based on the sparsity/density information of the target point cloud, the type of the occupancy code context model used to perform entropy decoding on the target point cloud comprises at least one of the following:

   in a case that the sparsity/density information of the target point cloud is a sparse point cloud, determining that the type of the occupancy code context model used to perform entropy decoding on the target point cloud is occupancy code context model 1; or
   in a case that the sparsity/density information of the target point cloud is a dense point cloud, determining that the type of the occupancy code context model used to perform entropy decoding on the target point cloud is occupancy code context model 2.

21. The method according to any one of claims 10 to 19, wherein the target point cloud is a point cloud sequence or a point cloud slice in a point cloud sequence.

22. An entropy encoding apparatus, comprising:

   a first obtaining module, configured to obtain sparsity/density information of a to-be-encoded target point cloud;
   a first determining module, configured to determine, based on the sparsity/density information, a type of an occupancy code context model used to perform entropy encoding on the target point cloud; and
an encoding module, configured to perform entropy encoding on the target point cloud based on the type of the
occupancy code context model.

23. An entropy encoding apparatus, comprising a processor, a memory, and a program or instructions stored in the memory and capable of running on the processor, wherein when the program or instructions are executed by the processor, the steps of the entropy encoding method according to any one of claims 1 to 9 are implemented.

24. An entropy decoding apparatus, comprising:

a second obtaining module, configured to obtain a type of an occupancy code context model used to perform entropy decoding on a to-be-decoded target point cloud, wherein the type of the occupancy code context model used to perform entropy decoding on the target point cloud is determined by sparsity/density information of the target point cloud; and
a decoding module, configured to perform entropy decoding on the target point cloud based on the type of the occupancy code context model.

25. An entropy decoding apparatus, comprising a processor, a memory, and a program or instructions stored in the memory and capable of running on the processor, wherein when the program or instructions are executed by the processor, the steps of the entropy decoding method according to any one of claims 10 to 21 are implemented.

26. A readable storage medium, wherein the readable storage medium stores a program or instructions, and when the program or instructions are executed by a processor, the steps of the entropy encoding method according to any one of claims 1 to 9 are implemented, or the steps of the entropy decoding method according to any one of claims 10 to 21 are implemented.

27. A chip, comprising a processor and a communications interface, wherein the communications interface is coupled to the processor, and the processor is configured to run a program or instructions to implement the steps of the entropy encoding method according to any one of claims 1 to 9 or implement the steps of the entropy decoding method according to any one of claims 10 to 21.

28. A computer program product, wherein the computer program product is stored in a non-volatile storage medium, and when the computer program product is executed by at least one processor, the steps of the entropy encoding method according to any one of claims 1 to 9 are implemented, or the steps of the entropy decoding method according to any one of claims 10 to 21 are implemented.

29. A communications device, configured to perform the steps of the entropy encoding method according to any one of claims 1 to 9 or implement the steps of the entropy decoding method according to any one of claims 10 to 21.

FIG. 1

```
                            ┌──────────────┐
                       ◁────┤    Start     ├────▷
                            └──────┬───────┘
                                   │
                                   ▼
    ┌────────────────────────────────────────────────────────┐
    │                                                        │      201
    │  An entropy encoding apparatus obtains sparsity/density │  ⌇
    │         information of a to-be-encoded target point cloud │
    │                                                        │
    └────────────────────────┬───────────────────────────────┘
                             │
                             ▼
    ┌────────────────────────────────────────────────────────┐
    │                                                        │      202
    │  Determine, based on the sparsity/density information, a │  ⌇
    │  type of an occupancy code context model used to perform │
    │     entropy encoding on the target point cloud          │
    │                                                        │
    └────────────────────────┬───────────────────────────────┘
                             │
                             ▼
    ┌────────────────────────────────────────────────────────┐
    │                                                        │      203
    │   Perform entropy encoding on the target point cloud    │  ⌇
    │   based on the type of the occupancy code context model  │
    │                                                        │
    └────────────────────────┬───────────────────────────────┘
                             │
                             ▼
                      ╭──────────────╮
                      │     End      │
                      ╰──────────────╯
```

FIG. 2

FIG. 3

Subnode 0    Subnode 1    Subnode 2    Subnode 3

Subnode 4    Subnode 5    Subnode 6    Subnode 7

FIG. 4

Right, upper, and
rear coplanar
neighbors

Left, front, and
lower coplanar
neighbors

Right, upper, and
rear collinear
neighbors

Left, front, and
lower collinear
neighbors

FIG. 5

Subnode 0    Subnode 1    Subnode 2    Subnode 3

Subnode 4    Subnode 5    Subnode 6    Subnode 7

FIG. 6

Subnode 0    Subnode 1    Subnode 2    Subnode 3

Subnode 4    Subnode 5    Subnode 6    Subnode 7

FIG. 7

FIG. 8

FIG. 9

Start

An entropy decoding apparatus obtains a type of an occupancy code context model used to perform entropy decoding on a to-be-decoded target point cloud /1001

Perform entropy decoding on the target point cloud based on the type of the occupancy code context model /1002

End

FIG. 10

Entropy decoding apparatus /1100

Second obtaining module /1101

Decoding module /1102

FIG. 11

1200

Communications device

1201 Processor ⟺ Memory 1202

FIG. 12

## INTERNATIONAL SEARCH REPORT

International application No.

**PCT/CN2022/097852**

### A. CLASSIFICATION OF SUBJECT MATTER

H04N 19/13(2014.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

WPABSC; CNTXT; ENTXTC; CNKI; DWPI; VEN; WOTXT; USTXT; EPTXT; IEEE; JVET: 点云, 体积, 上下文, 疏密, 密度, 稀疏, 密集, 稠密, 分辨率, 熵编码, 尺寸, 大小, 点数, 阈值, point cloud, volume, context, density, sparse, thick, dense, resolution, entropy coding, measure, size, number, threshold

### C. DOCUMENTS CONSIDERED TO BE RELEVANT

| Category* | Citation of document, with indication, where appropriate, of the relevant passages | Relevant to claim No. |
|---|---|---|
| Y | WO 2021069949 A1 (BLACKBERRY LTD.) 15 April 2021 (2021-04-15) description, paragraphs 30-104 | 1-29 |
| Y | US 2020342250 A1 (UNIKIE OY) 29 October 2020 (2020-10-29) description, paragraphs 26-73 and figures 1-4 | 1-29 |
| A | US 10693492 B1 (BLACKBERRY LTD. et al.) 23 June 2020 (2020-06-23) entire document | 1-29 |
| A | US 2021133463 A1 (APTIV TECHNOLOGIES LTD.) 06 May 2021 (2021-05-06) entire document | 1-29 |
| A | WO 2020010444 A1 (ONTARIO INC. 2236008 et al.) 16 January 2020 (2020-01-16) entire document | 1-29 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 August 2022** | **26 August 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/097852**

| Patent document cited in search report | | | Publication date (day/month/year) | Patent family member(s) | | | Publication date (day/month/year) |
|---|---|---|---|---|---|---|---|
| WO | 2021069949 | A1 | 15 April 2021 | CA | 3153825 | A1 | 15 April 2021 |
| US | 2020342250 | A1 | 29 October 2020 | | None | | |
| US | 10693492 | B1 | 23 June 2020 | EP | 3991437 | A1 | 04 May 2022 |
| | | | | WO | 2020259979 | A1 | 30 December 2020 |
| | | | | CN | 114008997 | A | 01 February 2022 |
| | | | | KR | 20220027869 | A | 08 March 2022 |
| US | 2021133463 | A1 | 06 May 2021 | CN | 112749616 | A | 04 May 2021 |
| | | | | US | 2022165065 | A1 | 26 May 2022 |
| | | | | EP | 3816655 | A1 | 05 May 2021 |
| WO | 2020010444 | A1 | 16 January 2020 | EP | 3595180 | A1 | 15 January 2020 |
| | | | | US | 2021272324 | A1 | 02 September 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110656066